(19)

**Europäisches Patentamt**
**European Patent Office**
**Office européen des brevets**

(11) **EP 3 211 745 A1**

(12) **EUROPEAN PATENT APPLICATION**

(43) Date of publication:
**30.08.2017 Bulletin 2017/35**

(51) Int Cl.:
*H02J 3/38* (2006.01)          *H01M 8/04537* (2016.01)

(21) Application number: **17151752.7**

(22) Date of filing: **17.01.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **AISIN SEIKI KABUSHIKI KAISHA Aichi 448-8650 (JP)**<br><br>(72) Inventors:<br>• **ANDO, Yasuaki**<br>  **Kariya-shi,, Aichi 448-8650 (JP)**<br>• **UNNO, Ryo**<br>  **Kariya-shi,, Aichi 448-8650 (JP)** |
| (30) Priority: **26.02.2016 JP 2016036226** | (74) Representative: **TBK**<br>**Bavariaring 4-6**<br>**80336 München (DE)** |

(54) **SYSTEM INTERCONNECTION CONTROL DEVICE**

(57)     A system interconnection control device (10) includes the control device (16) including a target value calculation portion (41) calculating a fuel cell output target value (PFC_ref) by controlling an output electric power detected value (Pout_d) to be matched with an output electric power target value (Pout_ref) of an inverter (14) being set by following the load electric power calculation value (PL_d), a correction value calculation portion (43) estimating an internal impedance (Z0) of the fuel cell (11) and calculating a correction value (V2) of the target value (V1_ref) that correlates to the estimated impedance value (Z_est), and a fuel cell output target value setting portion (44) setting the fuel cell output target value (PFC_ref) by calculating the fuel cell output target value (PFC_ref) by adding or subtracting the correction value (V2) to or from the target value (V1_ref).

**FIG. 3**

## Description

TECHNICAL FIELD

This disclosure generally relates to a system interconnection control device.

BACKGROUND DISCUSSION

A known impedance calculation method for estimating an internal impedance of a fuel cell is disclosed in JP2013-145692A (hereinafter referred to as Patent reference 1). In the impedance calculation method disclosed in Patent reference 1, a system interconnection control device obtains each time series data of a current and of a voltage of the fuel cell when a hunting phenomenon occurs in response to a variation of a load. The impedance calculation method disclosed in Patent reference 1 calculates the impedance based on processed two data that are obtained by processing each time series data of the current and of the voltage using the fast Fourier transform.

In system interconnection control, an output electric power is required to be controlled so as to follow a load electric power. Specifically, a reverse power flow in which the output electric power exceeds the load electric power is required to be inhibited. When the occurrence of the reverse power flow is estimated, the output electric power is required to be decreased promptly. An output current of the fuel cell is required to be decreased in order to decrease the output electric power. In other words, the output voltage of the fuel cell is required to be increased.

However, the output voltage and the output current of the fuel cell are affected by the internal impedance that varies in response to a temperature level of a power generating portion. Accordingly, a target value of the output voltage or a target value of the output current of the fuel cell (target values relating to an output electric power of the fuel cell) is required to be set in response to the variation of the internal impedance.

A need thus exists for a system interconnection control device that inhibits a reverse power flow by setting a target value relating to an output electric power of a fuel cell in response to a variation of an internal impedance at a time of a load variation when a load electric power decreases.

SUMMARY

According to an aspect of this disclosure, a system interconnection control device includes a fuel cell generating an electric power with a fuel and a cathode gas, a converter boosting a direct current power outputted from the fuel cell, an inverter converting the direct current power boosted by the converter into an alternating current power, the inverter outputting the alternating current power to a load being connected to a system power supply, an output electric power detector detecting an output electric power of the inverter, a utility electric power detector detecting a utility electric power supplied to the load from the system power supply, and a control device controlling the converter and the inverter by setting a fuel cell output target value serving as a target value relating to an output electric power of the fuel cell, such that the output electric power of the inverter follows a load electric power of the load, in response to a load electric power calculation value being calculated by using an output electric power detected value detected by the output electric power detector and a utility electric power detected value detected by the utility electric power detector. The control device includes a target value calculation portion calculating a target value serving as the fuel cell output target value by controlling the output electric power detected value to be matched with an output electric power target value of the inverter being set by following the load electric power calculation value, a correction value calculation portion estimating an internal impedance of the fuel cell and calculating a correction value of the target value that correlates to the estimated impedance value when the output electric power detected value is greater than the output electric power target value, and a fuel cell output target value setting portion setting the fuel cell output target value by calculating the fuel cell output target value by adding or subtracting the correction value to or from the target value when the output electric power detected value is greater than the output electric power target value.

Accordingly, when the load varies (when the load electric power is decreased, or when the output electric power detected value is greater than the output electric power target value), the system interconnection control device may set the target value of the output voltage serving as a target value relating to the output electric power of the fuel cell in accordance with the fluctuation of the internal impedance, and may inhibit the reverse power flow.

According to another aspect of this disclosure, the system interconnection control device further includes an output voltage detector detecting an output voltage of the fuel cell, and an output current detector detecting an output current of the fuel cell. The correction value calculation portion calculates the estimated impedance value by dividing an output voltage variable quantity serving as a variable quantity of a plurality of voltage detected values successively detected by the output voltage detector by an output current variable quantity serving as a variable quantity of a plurality of current detected values successively detected by the output current detector during a time period that is a same as a time period when the plurality of the voltage detected values is detected.

Thus, according to the system interconnection control device, a current time series data and a voltage time series data do not have to be processed using a fast Fourier transform method, or a FFT method, respectively, as the disclosure disclosed in Patent reference 1 does. Thus, comparing to the disclosure disclosed in Patent reference 1, the system interconnection control device may simplify the processing required for the estimation of the internal impedance of the fuel cell, and may calculate the estimated impedance value in a short time.

According to still further aspect of this disclosure, the correction value calculation portion calculates the output voltage variable quantity by using a first voltage movement average value serving as a movement average of the plurality of voltage detected values successively detected from a reference time to a first time in which a first time period has elapsed, and a second voltage movement average value serving as a movement average of the plurality of voltage detected values successively detected from the first time to a second time in which a same time period as the first time period has elapsed, the correction value calculation portion calculating the output voltage variable quantity by subtracting the second voltage movement average value from the first voltage movement average value. The correction value calculation portion calculates the output current variable quantity by using a first current movement average value serving as a movement average of the plurality of current detected values successively detected from the reference time to the first time, and a second current movement average value serving as a movement average of the plurality of current detected values successively detected from the first time to the second time, the correction value calculation portion calculating the output current variable quantity by subtracting the second current movement average value from the first current movement average value.

Thus, for example, the system interconnection control device may calculate the estimated impedance value by using the output voltage variable quantity and the output current variable quantity that each includes a wide range (the time twice of the first time) comparing to a case where the estimated impedance value is calculated by calculating the variable quantity by simply averaging the plural detected values successively detected in the first time, and by dividing the variable quantity by the variable quantity. Accordingly, the system interconnection control device may enhance the estimation accuracy of the internal impedance.

According to still another aspect of this disclosure, the correction value calculation portion sets the estimated impedance value that is estimated when a temperature variable quantity of a power generating portion of the fuel cell at a predetermined time is greater than a predetermined threshold value, the estimated impedance value that is most recently estimated, as the estimated impedance value when the temperature variable quantity is equal to or lower than the predetermined threshold value.

Thus, the system interconnection control device may reduce the calculation frequency of the estimated impedance value, thereby inhibiting the estimation error of the estimated impedance value and reducing the load for processing.

According to another aspect of this disclosure, the correction value calculation portion increases the correction value of the target value as the estimated impedance value increases.

Accordingly, the system interconnection control device may correct the target value by the appropriate correction value that matches the estimated impedance value.

According to still further aspect of this disclosure, the correction value calculation portion includes a relationship specification portion specifying a relationship between, a difference between the electric power of the output electric power detected value and the electric power of the output electric power target value, and the correction value of the target value. The relationship specified by the relationship specification portion includes a mutual relationship in which the correction value of the target value increases as the difference between the electric power of the output electric power detected value and the electric power of the output electric power target value increases. The correction value calculation portion calculates the correction value of the target value in accordance with the mutual relationship.

Accordingly, the correction value calculation portion may calculate the correction value of the target value in consideration of the difference of the electric power between the output electric power detected value of the inverter and the output electric power target value of the inverter.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram illustrating an example of a system interconnection control device according to a first embodiment disclosed here;
Fig. 2 is a block diagram illustrating an example of a control device;
Fig. 3 is a block diagram illustrating an example of control blocks of the control device;
Fig. 4 is a flowchart illustrating an example of a control process operated by the control device;
Fig. 5 is a view schematically illustrating an example of memory regions storing voltage detected values and current detected values of a fuel cell;
Fig. 6 is a view illustrating an example of a relationship between an estimated impedance value and a correction value of a target value; and
Fig. 7 is a flowchart illustrating an example of a control process of a control device according to a second embodiment.

DETAILED DESCRIPTION

A system interconnection control device 10 of first and second embodiments will hereunder be explained with reference to the drawings. The system interconnection control device 10 corresponds to a control device of the system interconnection device. Each of the drawings corresponds to a conceptual illustration, and does not specify a measurement, or a size of a detailed construction.

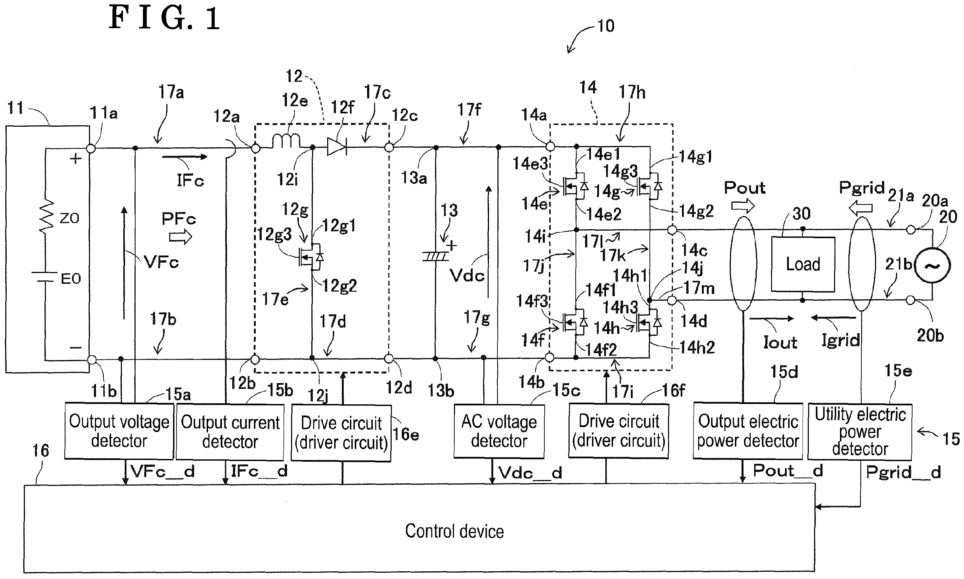

As shown in Fig. 1, the system interconnection control device 10 of the first embodiment includes a fuel cell 11, a converter 12, a condenser 13, an inverter 14, a detector 15, and a control device 16. The detector 15 includes an output voltage detector 15a, an output current detector 15b, a direct current voltage detector 15c, an output electric power detector 15d, and a utility electric power detector 15e.

The fuel cell 11 corresponds to a power generating device generating an electric power with fuel and cathode gas, and includes various fuel cells (for example, a known solid oxide fuel cell or a known SOFC). The fuel includes reformed gas, for example, natural gas, made by a reforming of a hydrocarbon source material. The cathode gas includes, for example, air. The fuel cell 11 is provided with a first output terminal 11 a and a second output terminal 11 b. The first output terminal 11 a is connected to a positive terminal of the fuel cell 11. The second output terminal 11 b is connected to a negative terminal of the fuel cell 11.

The converter 12 boosts a direct current power, or a DC power outputted from the fuel cell 11 and outputs the DC power to the inverter 14. The converter 12 includes a first input terminal 12a, a second input terminal 12b, a first output terminal 12c, and a second output terminal 12d. A first electric circuit 17a is provided between the first output terminal 11 a of the fuel cell 11 and the first input terminal 12a of the converter 12. A second electric circuit 17b is provided between the second output terminal 11 b of the fuel cell 11 and the second input terminal 12b of the converter 12. The DC power (an output electric power PFc) outputted from the fuel cell 11 is inputted to the converter 12 via the first and second electric circuits 17a, 17b. The DC power boosted by the converter 12 is outputted from the first and second output terminals 12c, 12d. Each of the first and second electric circuits 17a, 17b, and electric circuits disclosed in the disclosure may correspond to a known electric power wire.

An output voltage detector 15a is provided between the first and second electric circuits 17a, 17b. The first electric circuit 17a includes an output current detector 15b. The output voltage detector 15a detects an output voltage VFc of the fuel cell 11. In particular, the output voltage detector 15a detects a DC voltage that flows between the first and second output terminals 11 a, 11 b of the fuel cell 11. A detected value detected by the output voltage detector 15a corresponds to a voltage detected value VFc_d according to the disclosure.

For example, the output voltage detector 15a detects the DC voltage that flows between the first and second input terminals 11 a, 11 b of the fuel cell 11 based on a divided voltage value that is divided by plural electrical resistors having known resistance value, the electrical resistors dividing the DC voltage that flows between the first and second electric circuits 17a, 17b. In particular, the DC voltage divided by the electric resistor is inputted to the control device 16. The control device 16 identifies the DC voltage divided by a known analog-to-digital converter, or a known A/D converter, and detects the DC voltage that flows between the first and second output terminals 11 a, 11 b of the fuel cell 11.

The output current detector 15b detects an output current IFc of the fuel cell 11. In particular, the output current detector 15b detects the DC outputted from the first output terminal 11 a of the fuel cell 11. The detected value detected by the output current detector 15b corresponds to the current detected value IFc_d according to the disclosure. The output current detector 15b may correspond to a known current detector (for example, a current detector including a current transformer). The current detected value IFc_d is inputted to the control device 16. The control device 16 may calculate the output electric power PFc of the fuel cell 11 by multiplying the voltage detected value VFc_d by the current detected value IFc_d.

The converter 12 includes a reactor 12e, a diode 12f, and a switching element 12g. These elements may correspond to known devices for electric power. For example, the switching element 12g may include a known field effect transistor, or a known FET, or a known insulated gate bipolar transistor, or a known IGBT.

A third electric circuit 17c is provided between the first input terminal 12a and the first output terminal 12c of the converter 12. A fourth electric circuit 17d is provided between the second input terminal 12b and the second output terminal 12d of the converter 12. The first input terminal 12a, the reactor 12e and the diode 12f are provided on the third electric circuit 17c in the aforementioned order. The third electric circuit 17c that is provided between the reactor 12e and the diode 12f includes a first connection point 12i that is connected to a drain 12g1 of the switching element 12g. A source 12g2 of the switching element 12g is connected to a second connection point 12j that is provided at the fourth electric circuit 17d. A fifth electric circuit 17e is provided between the first connection point 12i and the second connection point 12j. A gate 12g3 of the switching element 12g is connected to the control device 16 via a drive circuit 16e. The drive circuit 16e may correspond to a known driver circuit. The converter 12 has only to boost the output electric power PFc outputted from the fuel cell 11 and is not limited to the aforementioned construction.

A sixth electric circuit 17f is provided between the third output terminal 12c of the converter 12 and a third input terminal 14a of the inverter 14. A seventh electric circuit 17g is provided between the second output terminal 12d of the converter 12 and a second input terminal 14b of the inverter 14. The condenser 13 and the DC voltage detector 15c are provided between the sixth and seventh electric circuits 17f, 17g.

The sixth electric circuit 17f is provided with a first connection point 13a that is connected to a first end (the positive terminal) of the condenser 13. The seventh electric circuit 17g is provided with a second connection point 13b that is connected to a second end (the negative terminal) of the condenser 13. The condenser 13 may correspond to a known electrolytic condenser, and may reduce ripples of the DC power boosted by the converter 12. The DC voltage detector 15c detects a DC voltage Vdc of the DC power boosted by the converter 12. In particular, the DC voltage detector 15c detects the DC voltage applied between the first and second input terminals 14a, 14b of the inverter 14. According to the disclosure, the detected value detected by the DC voltage detector 15c corresponds to a DC voltage detected value Vdc_d.

The DC voltage detector 15c may detect the DC voltage that is applied between the first and second input terminals 14a, 14b of the inverter 14 based on the divided voltage value that is divided by the plural resistors having the known resistance value, the resistors dividing the DC voltage that flows between the sixth electric circuit 17f and the seventh electric circuit 17g. Similarly to the DC voltage that is detected by the output voltage detector 15a, the control device 16 may calculate the DC voltage applied between the first and second input terminals 14a, 14b of the inverter 14.

The control device 16 determines a duty ratio of a pulse width modulation signal, or a PWM signal, serving as a control signal of the switching element 12g driving the converter 12, based on a target value of the output electric power. The control device 16 applies the pulse signal that is based on the duty ratio to the gate 12g3 of the switching element 12g via the drive circuit 16e serving as a driver circuit. For example, when a voltage level applied to the gate 12g3 of the switching element 12g is high (in a state where the voltage value is greater than a predetermined voltage value), a portion between the drain 12g1 and the source 12g2 of the switching element 12g comes to be in a closed state where the portion is electrically conducted or connected, and an electromagnetic energy is stored in the reactor 12e.

When the voltage level applied to the gate 12g3 of the switching element 12g is low (in a state where the voltage value is lower than the predetermined voltage value), the portion between the drain 12g1 and the source 12g2 of the switching element 12g comes to be in an open state where the portion is electrically disconnected, and the electromagnetic energy stored in the reactor 12e is charged to the condenser 13. Accordingly, the output electric power of the converter 12 increases. As such, the control device 16 may control the output electric power of the converter 12 to a desired, or favorable electric power value (a target value of the output electric power).

The inverter 14 converts the DC power boosted by the converter 12 to an alternating current power, or an AC power, and outputs the AC power to a load 30 that is connected to a system electric power supply 20. The inverter 14 includes a first input terminal 14a, a second input terminal 14b, a first output terminal 14c, and a second output terminal 14d. A first electric circuit 21a is provided between the first output terminal 14c of the inverter 14 and a connection terminal 20a of the system electric power supply 20. A second electric circuit 21b is provided between the second output terminal 14d of the inverter 14 and a second connection terminal 20b of the system electric power supply 20. The AC power outputted from the inverter 14 is outputted via the first and second electric circuits 21a, 21b. Accordingly, the AC power outputted from the inverter 14 may be supplied to the load 30. The system electric power supply 20 corresponds to, for example, an AC power supply supplied from a commercial distribution electric power grid held by an electric power company. The load 30 corresponds to a load requiring the electric power as a drive source, and corresponds to, for example, a home appliance (for example, an electric device) and an industrial appliance (for example, a robot).

The inverter 14 includes plural (four, in the first embodiment) switching elements (a first switching element 14e, a second switching element 14f, a third switching element 14g, and a fourth switching element 14h). Similarly to the switching element 12g of the converter 12, each of the first switching element 14e, the second switching element 14f, the third switching element 14g, and the fourth switching element 14h may correspond to the known FET, or the known IGBT.

As shown in Fig. 1, an eighth electric circuit 17h is provided between the first input terminal 14a of the inverter 14, a drain 14e1 of the first switching element 14e, and a drain 14g1 of the third switching element 14g. A ninth electric circuit 17i is provided between the second input terminal 14b of the inverter 14, a source 14f2 of the second switching element 14f, and a source 14h2 of the fourth switching element 14h.

The first and second switching elements 14e, 14f are connected in series between the eighth electric circuit 17h and the ninth electric circuit 17i. A tenth electric circuit 17j is provided between a source 14e2 of the first switching element 14e and a drain 14f1 of the second switching element 14f. The third switching element 14g and the fourth switching element 14h are connected in series between the eighth electric circuit 17h and the ninth electric circuit 17i. An eleventh electric circuit 17k is provided between a source 14g2 of the third switching element 14g and a drain 14h1 of the fourth switching element 14h. That is, the first and second switching elements 14e, 14f that are connected in series, and the third and fourth switching elements 14g, 14h that are connected in series, are connected in parallel between the eighth electric circuit 17h and the ninth electric circuit 17i.

The tenth electric circuit 17j includes a connection point 14i. A twelfth electric circuit 17l is provided between the connection point 14i and the first output terminal 14c of the inverter 14. The eleventh electric circuit 17k includes a connection point 14j. A thirteenth electric circuit 17m is provided between the connection point 14j and the second output terminal 14d of the inverter 14. As such, the first, second, third and fourth switching elements 14e, 14f, 14g, 14h are connected in a full-bridge configuration.

First, second, third and fourth gates 14e3, 14f3, 14g3, 14h3 of the first, second, third and fourth switching elements 14e, 14f, 14g, 14h are connected to the control device 16 via a drive circuit 16f. The drive circuit 16f may correspond to a known driver circuit. The first, second, third and fourth switching elements 14e, 14f, 14g, 14h are drive-controlled on a basis of driving signals (opening and closing signals) outputted from the control device 16.

For example, when a voltage level applied to the first gate 14e3 of the first switching element 14e is high (in a state where the voltage is greater than a predetermined voltage value), a portion between the drain 14e1 and the source 14e2 of the first switching element 14e is electrically conducted, or connected. On the other hand, when the voltage level applied to the first gate 14e3 of the first switching element 14e is low (in a state where the voltage is lower than the predetermined voltage value), the portion between the drain 14e1 and the source 14e2 of the first switching element 14e is electrically disconnected. The second, third and fourth switching elements 14f, 14g, 14h include the same manner as described above. The control device 16 may vary the duty ratio along with, for example, PWM, and may control the first, second, third and fourth switching elements 14e, 14f, 14g, 14h to open and close in response to the duty ratio.

The inverter 14 may change the DC power inputted from the first and second input terminals 14a, 14b of the inverter 14 to the AC power by alternatively repeating a first state and a second state, the first state where the first and fourth switching elements 14e, 14h are in a closed state and the second and third switching elements 14f, 14g are in an open state, the second state where the first and fourth switching elements 14e, 14h are in the open state and the second and third switching elements 14f, 14g are in the closed state.

A known filter circuit may be provided between the inverter 14 and the load 30. The filter circuit may correspond to a known LC circuit. Accordingly, a harmonics content included in an output current Iout of the inverter 14, the output current Iout outputted from the first and second output terminals 14c, 14d of the inverter 14, is reduced, and the output current Iout of the inverter 14 is shaped in a sine wave.

The output electric power detector 15d detects an output electric power Pout outputted from the first and second output terminals 14c, 14d of the inverter 14. In this disclosure, a detected value detected by the output electric power detector 15d corresponds to an output electric power detected value Pout_d. The output electric power detector 15d may correspond to a known electric power detector. The output electric power detector 15d may calculate the output electric power Pout of the inverter 14 based on a system voltage of the system electric power supply 20 (a voltage applied between the first connection terminal 20a and the second connection terminal 20b of the system electric power supply 20) and the output current Iout of the inverter 14, and may define the calculated value as the output electric power detected value Pout_d.

The utility electric power detector 15e detects a utility electric power Pgrid supplied to the load 30 from the system electric power supply 20. In this disclosure, a detected value detected by the utility electric power detector 15e corresponds to a utility electric power supply detected value Pgrid_d. The utility electric power detector 15e may correspond to a known electric power detector. As shown in Fig. 1, a current supplied to the load 30 from the system electric power supply 20 is shown as a system current Igrid. The detector 15 is not limited to the aforementioned detector, and may include various types of detectors being used in a system interconnection control device.

Detected values detected by the detector 15 are inputted to the control device 16. According to the first embodiment, each of the detected values corresponds to the voltage detected value VFc_d detected by the output voltage detector 15a, the current detected value IFc_d detected by the output current detector 15b, the DC voltage detected value Vdc_d detected by the DC voltage detector 15c, the output electric power detected value Pout_d detected by the output electric power detector 15d, and the utility electric power detected value Pgrid_d detected by the utility electric power detector 15e.

An added electric power established by the addition of the output electric power Pout of the inverter 14 to the utility electric power Pgrid of the load 30 is consistent with a load electric power PL of the load 30. Accordingly, the control device 16 sets a fuel cell output target value PFc_ref serving as a target value relating to the output electric power PFc of the fuel cell 11 so that the output electric power Pout of the inverter 14 follows the load electric power PL of the load 30. The control device 16 drive-controls at least one of the switching elements (one, in the first embodiment) of the converter 12, and drive-controls plural switching elements (four (the first, second, third and fourth switching elements 14e, 14f, 14g, 14h) in the first embodiment) of the inverter 14 in response to the fuel cell output target value PFc_ref.

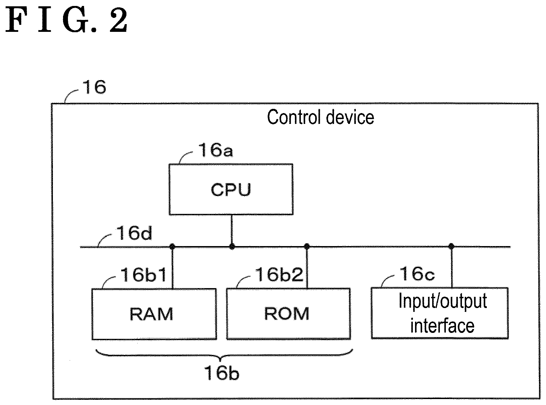

As shown in Fig. 2, the control device 16 includes a known central processing unit 16a, a memory device 16b and an input/output interface 16c that are electrically connected with one another via a bus 16d. The control device 16 may operate various processing using these devices, and may send and receive input/output signals (including driving signals) to and from external devices.

The central processing unit 16a may operate various processing. The memory device 16b includes a first memory device 16b1 and a second memory device 16b2. The first memory device 16b1 corresponds to a volatile memory device (a random access memory, or a RAM) that may read and write. The second memory device 16b2 corresponds to a non-volatile memory device (a read only memory, or a ROM) that may read only. An input/output interface 16c sends and receives input/output signals (including driving signals) to and from the external devices.

For example, the CPU 16a read out a drive control program of the inverter 14, the drive control program memorized in the second memory device 16b2, to the first memory device 16b1, and operates the drive control program. The CPU 16a generates drive signals of the inverter 14 (opening and closing signals of the first, second, third and fourth switching elements 14e, 14f, 14g, 14h) based on the drive control program. The generated drive signals are applied to the first, second, third and fourth gates 14e3, 14f3, 14g3, 14h3 of the switching elements 14e, 14f, 14g, 14h of the inverter 14 via the input/output interface 16c and the drive circuit 16f. As such, the control device 16 drive-controls the inverter 14. The converter 12 is drive-controlled by the control device 16 in the same manner as the inverter 14.

The control by the system interconnection control device 10 will hereunder be explained. The output electric power Pout of the inverter 14 (the output electric power of the system interconnection control device 10) is required to be controlled so as to follow the load electric power PL. Specifically, a reverse power flow in which the output electric power Pout exceeds the load electric power PL is required to be inhibited. When the reverse power flow is estimated, the output electric power Pout of the inverter 14 is required to be decreased promptly. The output electric power PFc of the fuel cell 11 is required to be decreased in order to decrease the output electric power Pout of the inverter 14.

As shown in Fig. 1, the output voltage VFc of the fuel cell 11 is obtained by subtracting a voltage drop amount due to an internal impedance Z0 from an internal voltage E0 that is generated by the power generation. The voltage drop amount is obtained by multiplying the internal impedance Z0 by the output current IFc of the fuel cell 11. That is, the output voltage VFc of the fuel cell 11 is described in a Numerical formula 1. The output electric power PFc of the fuel cell 11 is described in a Numerical formula 2.

(Numerical formula 1)

$$VFc = E0 - Z0 \times IFc$$

(Numerical formula 2)

$$PFc = VFc \times IFc = (E0 - Z0 \times IFc) \times IFc$$

When the power generating state of the fuel cell 11 is in a constant state, the internal voltage E0 and the internal impedance Z0 are substantially constant. Thus, as described in Numerical formula 2, the output current IFc of the fuel cell 11 is required to be reduced in order to reduce the output electric power PFc of the fuel cell 11. In other words, as described in Numerical formula 1, the output voltage VFc of the fuel cell 11 is required to be increased in order to decrease the output electric power PFc of the fuel cell 11.

However, the internal impedance Z0 varies in response to the temperature level of a power generating portion (a cell stack reacting the fuel with the cathode gas) even though the range of fluctuation of the internal impedance Z0 is smaller than, for example, the output voltage VFc. Accordingly, the output voltage VFc and the output current IFc of the fuel cell 11 are affected by the internal impedance Z0. Thus, a target value VFc_ref of the output voltage VFc of the fuel cell 11 is required to be set in response to the variation of the internal impedance Z0 so as to appropriately inhibit the reverse power flow. A target value IFc_ref of the output current IFc of the fuel cell 11 is also required to be set in the aforementioned manner.

Each of the target value VFc_ref of the output voltage VFc and the target value IFc_ref of the output current IFc corresponds to a target value relating to the output electric power PFc of the fuel cell 11, and according to the disclosure, the target value corresponds to a fuel cell output target value PFc_ref. In the first embodiment, the target value VFc_ref of the output voltage VFc is an example to be explained as the fuel cell output target value PFc_ref. Alternatively, according to the disclosure, the target value IFc_ref of the output current IFc may be applied as the fuel cell output target value PFc_ref.

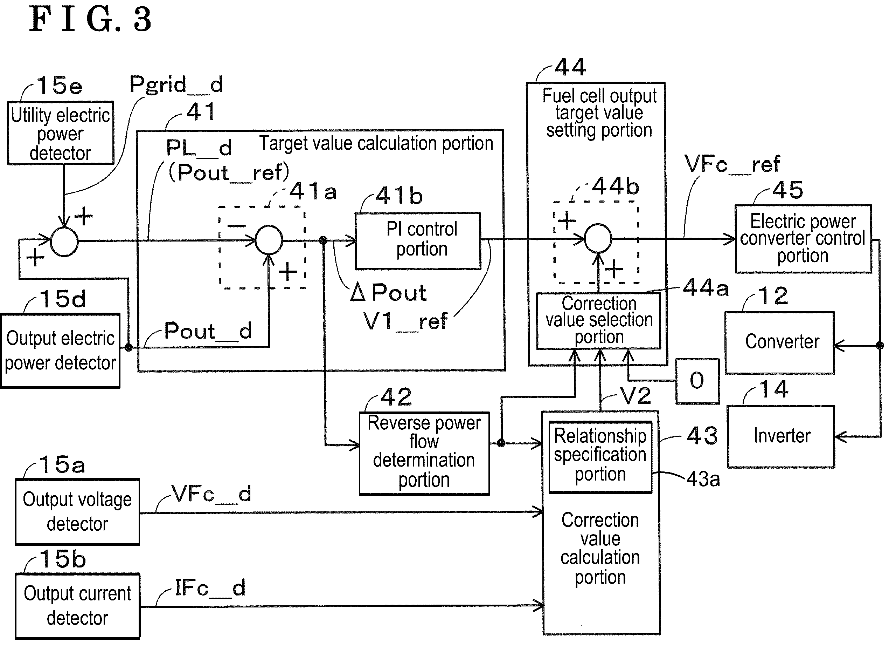

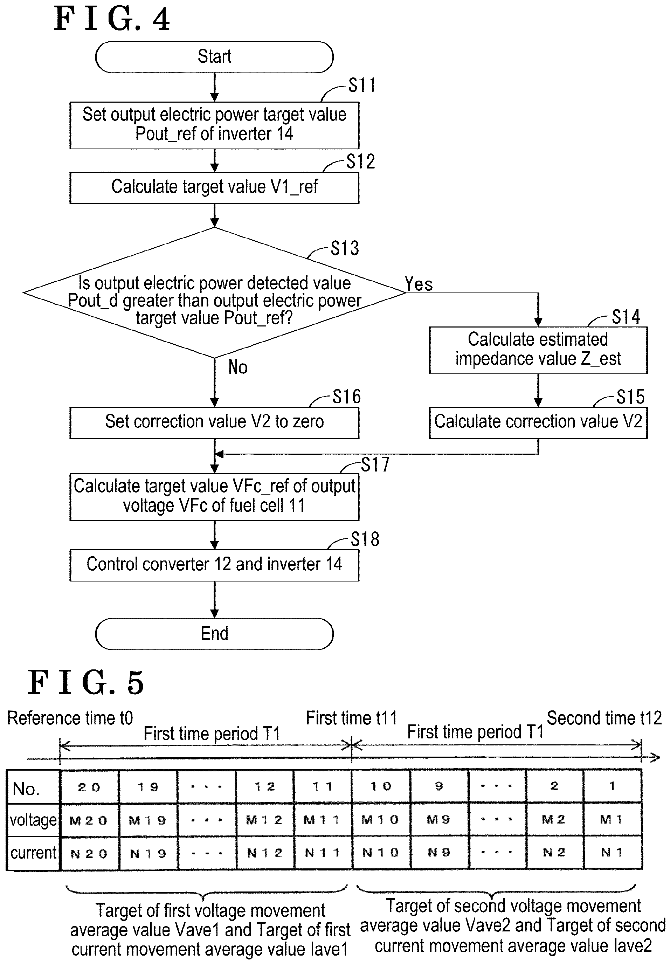

As shown in Fig. 3, the control device 16 includes a target value calculation portion 41, a reverse power flow determination portion 42, a correction value calculation portion 43, a fuel cell output target value setting portion 44, and an electric power converter control portion 45 as control blocks. The control device 16 operates a control program along with a flowchart shown in Fig. 4. The target value calculation portion 41 operates processes shown in Step S11 and Step 12. The reverse power flow determination portion 42 determines whether the output electric power detected value Pout_d is greater than the output electric power target value Pout_ref in Step S13. The correction value calculation portion 43 operates processes shown in Step S14 and Step S15. The fuel cell output target value setting portion 44 operates processes shown in Step S16 and Step S17. The electric power converter control portion 45 operates a process shown in Step S18.

The target value calculation portion 41 calculates a target value V1_ref serving as the target value VFc_ref of the output voltage VFc of the fuel cell 11. As shown in Fig. 3, the target value calculation portion 41 includes a subtractor 41a and a PI control portion 41b. An output electric power detected value Pout_d detected by the output electric power detector 15d and a load electric power calculation value PL_d are inputted to the subtractor 41 a. The load electric power calculation value PL_d is calculated by using an output electric power detected value Pout_d detected by the output electric power detector 15d and the utility electric power detected value Pgrid_d detected by the utility electric power detector 15e. In particular, the load electric power calculation value PL_d is calculated by adding the output electric power detected value Pout_d to the utility electric power detected value Pgrid_d. The output electric power target value Pout_ref of the inverter 14 is set by following the load electric power calculation value PL_d of the inverter 14 (Step S11 in Fig. 4).

As shown in Fig. 3, the subtractor 41 a calculates a deviation ∆Pout by subtracting the output electric power target value Pout_ref of the inverter 14 from the output electric power detected value Pout_d of the inverter 14. The deviation ∆Pout calculated by the subtractor 41 a is inputted to the PI control portion 41 b. According to the first embodiment, the PI control portion 41 b performs a proportional control and an integral control in order to match the output electric power detected value Pout_d of the inverter 14 with the output electric power target value Pout_ref of the inverter 14. The PI control portion 41 b includes a known proportional computing unit, a known integral computing unit, and a known adding machine.

The proportional computing unit outputs an arithmetic result that is obtained by multiplying a proportional gain $K_p$ by the deviation ∆Pout. The integral computing unit outputs an arithmetic result that is obtained by multiplying an integral gain $K_I$ by an integral value that is obtained by integrating the deviation ∆Pout. The adding machine adds the arithmetic result of the proportional computing unit to the arithmetic result of the integral computing unit. The PI control portion 41 b outputs an arithmetic result of the adding machine as a target value V1_ref. The PI control portion 41 b may include a differentiation computing unit outputting an arithmetic result that is obtained by multiplying a differentiation gain $K_D$ by a differentiation value that is obtained by differentiating the deviation ∆Pout. That is, the PI control portion 41 b may serve as a PID control portion operating a proportional control, an integral control, and a differentiation control. In this case, the arithmetic results of the proportional computing unit, of the integral computing unit, and of the differentiation computing unit are added by an adding machine.

As such, the target value calculation portion 41 may calculate the target value V1_ref by at least the proportional control (P control) and the integral control (I control) of the proportional control (P control), the integral control (I control), and the differentiation control (D control) (Step S12 in Fig. 4). A transfer function G (s) may be described in Numerical formula 3. The character s shows a Laplacian operator. The proportional gain $K_p$ and the integral gain $K_I$ are memorized in the second memory device 16b shown in Fig. 2. These control gains that are the proportional gain $K_p$ and the integral gain $K_I$ are read out from the second memory device 16b2 to the first memory device 16b1 at the time of the activation of the converter 12 and the inverter 14 along with a drive control program thereof.

## (Numerical formula 3)

$$G(s)=K_p + K_I \times 1/s$$

The deviation ∆Pout may be decreased in a short time as the proportional gain $K_p$ is increased. An offset (steady-state deviation) by the deviation ∆Pout may be zero in a short time as the integral gain $K_I$ is increased. A fluctuation of the deviation ∆Pout may be converged in a short time as the differentiation gain $K_D$ is increased, and comes to be strong against a disturbance. It is preferable that these control gains that are the proportional gain $K_p$, the integral gain $K_I$, and the differentiation gain $K_D$ are previously obtained by, for example, a simulation or an inspection by a real machine. The target value calculation portion 41 has only to calculate the target value V1_ref by controlling the output electric power detected value Pout_d of the inverter 14 to be matched with the output electric power target value Pout_ref of the inverter 14, and a control method is not limited to the aforementioned control method. Alternatively, the target value calculation portion 41 may calculate the target value V1_ref by known various feedback controls and feedforward controls.

The reverse power flow determination portion 42 determines whether the output electric power detected value Pout_d of the inverter 14 is greater than the output electric power target value Pout_ref of the inverter 14 (Step S13 in Fig. 4). As shown in Fig. 3, the deviation ∆Pout calculated by the subtractor 41 a is inputted to the reverse power flow determination portion 42. The reverse power flow determination portion 42 determines that the output electric power detected value Pout_d of the inverter 14 is greater than the output electric power target value Pout_ref of the inverter 14 when the deviation ∆Pout is a positive value (YES in Step S13 in Fig. 4; the reverse power flow is estimated). On the other hand, the reverse power flow determination portion 42 determines that the output electric power detected value Pout_d of the inverter 14 is equal to or lower than the output electric power target value Pout_ref of the inverter 14 when the deviation ∆Pout is zero or a negative value (NO in Step S13 in Fig. 4; the reverse power flow is not estimated). As such, the reverse power flow determination portion 42 may determine whether the reverse power flow is estimated.

The reverse power flow determination portion 42 outputs a determination result of whether the reverse power flow is estimated or not to the correction value calculation portion 43 and to the fuel cell output target value setting portion 44. The reverse power flow determination portion 42 outputs a calculation start command of the estimated impedance value Z_est against the correction value calculation portion 43 when the output electric power detected value Pout_d of the inverter 14 is greater than the output electric power target value Pout_ref of the inverter 14, and the reverse power flow is estimated (YES in Step S13 in Fig. 4).

The correction value calculation portion 43 calculates a correction value V2 of the target value V1_ref by estimating the internal impedance Z0 of the fuel cell 11 when the output electric power detected value Pout_d of the inverter 14 is greater than the output electric power target value Pout_ref of the inverter 14. As shown in Fig. 3, the voltage detected value VFc_d detected by the output voltage detector 15a, the current detected value IFc_d detected by the output current detector 15b, and the determination result (including the calculation start command of the estimated impedance value Z_est), outputted from the reverse power flow determination portion 42, whether the reverse power flow are estimated, are inputted to the correction value calculation portion 43.

When receiving the calculation start command of the estimated impedance value Z_est from the reverse power flow determination portion 42, the correction value calculation portion 43 calculates the estimated impedance value Z_est (Step S14 in Fig. 4). An estimation method of the internal impedance Z0 of the fuel cell 11 is not limited to above described method. According to the first embodiment, it is favorable that the correction value calculation portion 43 calculates the estimated impedance value Z_est by dividing an output voltage variable quantity $\Delta V$ by an output current variable quantity $\Delta I$. The output voltage variable quantity $\Delta V$ corresponds to a variable quantity of the plural (in the first embodiment, twenty) voltage detected values VFc_d successively detected by the output voltage detector 15a. The output current variable quantity $\Delta V$ corresponds to a variable quantity of the plural (in the first embodiment, twenty) current detected values IFc_d detected successively by the output current detector 15b at the same time as when the plural (twenty) voltage detected values VFc_d are detected.

As shown in Fig. 5, the correction value calculation portion 43 includes plural (twenty, in the first embodiment) memory ranges (M1-M20) continuously provided to store the voltage detected values VFc_d in the first memory device 16b1 shown in Fig. 2. The correction value calculation portion 43 includes plural (twenty, in the first embodiment) memory ranges (N1-N20) continuously provided to store the current detected values IFc_d in the first memory device 16b1 shown in Fig. 2.

For example, these memory regions employ a first-in, first-out (FIFO) method.

In particular, the voltage detected value VFc_d detected by the output voltage detector 15a is stored in a first memory range M1. Next, when the voltage detected value VFc_d is detected by the output voltage detector 15a, the voltage detected value VFc_d stored in the first memory range M1 is moved to a second memory range M2. The voltage detected value VFc_d newly detected is stored in the first memory range M1. Next, when the voltage detected value VFc_d is detected by the output voltage detector 15a, the voltage detected value VFc_d stored in the second memory range M2 is moved to a third memory range M3. The voltage detected value VFc_d stored in the first memory range M1 is moved to the second memory range M2. The voltage detected value VFc_d newly detected is stored in the first memory range M1. This operation is performed repeatedly as the voltage detected value VFc_d is detected.

When the voltage detected value VFc_d is detected by the output voltage detector 15a after the voltage detected values VFc_d are stored in all the memory ranges (M1-M20), the voltage detected value VFc_d serving as an oldest detected value stored in a twentieth memory range M20 is cancelled, and the voltage detected value VFc_d serving as a next oldest detected value stored in a nineteenth memory range M19 is moved to the twentieth memory range 20. The current detected value IFc_d of the fuel cell 11 is stored in the same manner as the voltage detected value VFc_d, and similarly to the voltage detected value VFc_d, the current detected value IFc_d is stored in the memory range (N1-N20).

Alternatively, the plural (for example, ten) voltage detected values VFc_d may be averaged, and an average value may be stored in the first memory range M1. Next, when an average value of the plural (ten) voltage detected values VFc_d is calculated, the average value of the plural (ten) voltage detected value VFc_d stored in the first memory range M1 is moved to the second memory range M2. The newly calculated average value of the plural (ten) voltage detected values VFc_d is stored in the first memory range M1. Hereinafter, the plural (ten) voltage detected values VFc_d may be stored in the memory ranges (M1-M20) by the aforementioned method. The current detected value IFc_d of the fuel cell 11 may be calculated in the same manner, and, similarly to the average value of the plural (ten) voltage detected value VFc_d, an average value of the plural (ten) current detected values IFc_d may be stored in the memory ranges (N1-N20).

The calculation method of the output voltage variable quantity $\Delta V$ and of the output current variable quantity $\Delta I$ is not limited to the above described method. According to the first embodiment, it is favorable that the correction value calculation portion 43 calculates the output voltage variable quantity $\Delta V$ by using a first voltage movement average value Vave1 and a second voltage movement average value Vave 2. In particular, it is favorable that the correction value calculation portion 43 subtracts the second voltage movement average value Vave2 from the first voltage movement value Vave1 to calculate the output voltage variable quantity $\Delta V$. In particular, it is favorable that the correction value calculation portion 43 calculates the output current variable quantity $\Delta I$ by using a first current movement average value Iave1 and a second current movement average value Iave 2. In particular, It is favorable that the correction value calculation portion 43 subtracts the second current movement average value Iave2 from the first current movement value Iave1 to calculate the output current variable quantity $\Delta I$.

The first voltage movement average value Vave1 corresponds to a movement average value of the plural (ten, in the first embodiment) voltage detected values VFc_d that are successively detected from a reference time t0 to a first time t11 in which a first time period T1 has elapsed. The second voltage movement average value Vave2 corresponds to a movement average value of the plural (ten, in the first embodiment) voltage detected values VFc_d that are successively detected from the first time t11 to a second time t12 in which a same time as the first time period T1 has elapsed. The first current movement average value Iave1 corresponds to a movement average value of the plural (ten, in the first embodiment) current detected values IFc_d that are successively detected from the reference time t0 to the first time t11. The second current movement average value Iave2 corresponds to a movement average value of the plural (ten, in the first embodiment) current detected values IFc_d that are successively detected from the first time t11 to the second time t12.

According to an example shown in Fig. 5, the correction value calculation portion 43 calculates the movement average of the plural (ten) voltage detected values VFc_d stored from the eleventh memory range (M11) to the twentieth memory range (M20), and identifies the calculation result as the first voltage movement average value Vave1. The correction value calculation portion 43 calculates the movement average of the plural (ten) voltage detected values VFc_d stored from the first memory range (M1) to the tenth memory range (M10), and identifies the calculation result as the second voltage movement average value Vave2. The correction value calculation portion 43 calculates the movement average of the plural (ten) current detected values IFc_d stored from the eleventh memory range (N11) to the twentieth memory range (N20), and identifies the calculation result as the first current movement average value Iave1. The correction value calculation portion 43 calculates the movement average of the plural (ten) current detected values IFc_d stored from the first memory range (N1) to the tenth memory range (N10), and identifies the calculation result as the second voltage movement average value Iave2.

The aforementioned movement average has only to correspond to a smoothened, or an averaged time series data, and the calculation is not limited to the aforementioned method. For example, the movement average may be a simple movement average in which an individual data is not assigned with weight, or may be a weighted moving average in which the individual data is assigned with weight. The weighted moving average may be a linear weighted moving average or an index weighted moving average. The linear weighted moving average is calculated such that a newest data is applied with a heaviest weight, and the older the data is, the lighter the weight comes to be. An oldest data is not applied with a weight. The index weighted moving average corresponds to the average in which the weight of the linear weighted moving average is reduced exponentially. The weighting of the individual data may be selected in response to a variation of the load electric power PL. For example, the weighting of the data in which a fluctuation range of the load electric power PL is great may be increased, and the weighting of the data in which the fluctuation range of the load electric power PL is less may be reduced.

As such, the correction value calculation portion 43 calculates the output voltage variable quantity $\Delta V$ and the output current variable quantity $\Delta V$. The calculating sequence or calculating order of the output voltage variable quantity $\Delta V$ and the output current variable quantity $\Delta I$ is not limited to the aforementioned manner. The correction value calculation portion 43 divides the output voltage variable quantity $\Delta V$ by the output current variable quantity $\Delta I$, and calculates the estimated impedance value Z_est. Next, the correction value calculation portion 43 calculates the correction value V2 of the target value V1_ref that correlates to the presumed estimated impedance value Z_est (Step S15 in Fig. 4).

As shown in Fig. 1, as the internal impedance Z0 increases, a voltage drop by the internal impedance Z0 increases. As a result, the difference between the internal voltage E0 generated by the power generation and the output voltage VFc of the fuel cell 11 increases. As such, the relationship between the internal impedance Z0 and the output voltage VFc of the fuel cell 11 is closely related to each other. The internal impedance Z0 and the output voltage VFc of the fuel cell 11 include a mutual relationship in which one of the internal impedance Z0 and the output voltage VFc changes when the other of the internal impedance Z0 and the output voltage VFc changes.

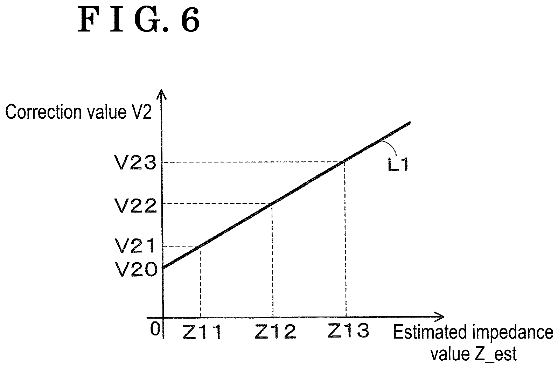

As shown in Fig. 6, it is favorable that the correction value calculation portion 43 increases the correction value V2 of the target value V1_ref as the estimated impedance value Z_est increases. As shown in Fig. 6, a lateral axis indicates the estimated impedance value Z_est and a longitudinal axis indicates the correction value V2. A straight line L1 shows the relationship between the estimated impedance value Z_est and the correction value V2. In this case, the relationship between the estimated impedance value Z_est and the correction value V2 may be described with a linear function. In Fig. 6, the correction value V2 when the estimated impedance value Z_est is zero is described with a correction value V20.

For example, the straight line L1 may be previously obtained by, for example, a simulation or an inspection by a real machine. The relationship shown in the straight line L1 is translated to, or described with for example, a map or a formula, and is memorized in the second memory device 16b2 shown in Fig. 2. The relationship (for example, the map and the formula) shown in the straight line L1 is read out to the first memory device 16b1 from the second memory device 16b2 along with the driving control programs of the converter 12 and of the inverter 14 at the time of the activation thereof. The relationship between the estimated impedance value Z_est and the correction value V2 is not limited to the linear function shown with the straight line L1. Alternatively, the relationship between the estimated impedance value Z_est and the correction value V2 may be specified or defined in accordance with a result of a simulation or an inspection by a real machine, and for example, may be described or shown with the exponential function.

As shown in Fig. 6, the correction value calculation portion 43 outputs a first correction value V21 as the correction value V2 of the target value V1_ref when the estimated impedance value Z_est corresponds to a first estimated impedance value Z11. The correction value calculation portion 43 outputs a second correction value V22 as the correction value V2 of the target value V1_ref when the estimated impedance value Z_est corresponds to a second estimated impedance value Z12. The correction value calculation portion 43 outputs a third correction value V23 as the correction value V2 of the target value V1_ref when the estimated impedance value Z_est corresponds to a third estimated impedance value Z13.

The fuel cell output target value setting portion 44 sets a target value VFc_ref of the output voltage VFc of the fuel cell 11 by adding the correction value V2 to the target value V1_ref when the output electric power detected value Pout_d of the inverter 14 is greater than the output electric power target value Pout_ref. As shown in Fig. 3, the fuel cell output target value setting portion 44 includes a correction value selection portion 44a and an adding machine 44b. A determination result whether the reverse power flow determined by the reverse power flow determination portion 42 is estimated, the correction value V2 of the target value V1_ref calculated by the correction value calculation portion 43, and the correction value V2 (the correction amount 0) of the target value V1_ref applied when the reverse power flow is not estimated, are inputted to the correction value selection portion 44a.

The correction value selection portion 44a selects and sets one of the aforementioned two correction values V2 of the target value V1_ref. In particular, when the reverse power flow determination portion 42 determines that the reverse power flow is estimated (when the output electric power detected value Pout_d of the inverter 14 is greater than the output electric power target value Pout_ref), the correction value selection portion 44a selects and sets the correction value V2 of the target value V1_ref calculated by the correction value calculation portion 43 as the correction value V2 of the target value V1_ref. On the other hand, when the reverse power flow determination portion 42 determines that the reverse power flow is not estimated (when the output electric power detected value Pout_d of the inverter 14 is equal to or lower than the output electric power target value Pout_ref), the correction value selection portion 44a selects and sets the correction value 0 (zero) as the correction value V2 of the target value V1_ref (Step S16 in Fig. 4).

As shown in Fig. 3, the target value V1_ref calculated by the target value calculation portion 41 and the correction value V2 of the target value V1_ref selected and set by the correction value selection portion 44a are inputted to the adding machine 44b. The adding machine 44b adds the correction value V2 to the target value V1_ref, and calculates the target value VFc_ref of the output voltage VFc of the fuel cell 11 (Step S17 in Fig. 4).

As such, when the reverse power flow is estimated (when the output electric power detected value Pout_d of the inverter 14 is greater than the output electric power target value Pout_ref), the fuel cell output target value setting portion 44 adds the correction value V2 correlating to the estimated impedance value Z_est to the target value V1_ref, and calculates and sets the target value VFc_ref of the output voltage VFc of the fuel cell 11. In other words, the fuel cell output target value setting portion 44 may appropriately reduce a target value of the output electric power PFc of the fuel cell 11 in accordance with the estimated impedance value Z_est when the reverse power flow is estimated.

The electric power converter control portion 45 controls the converter 12 and the inverter 14 to match the output electric power PFc of the fuel cell 11 with the target value of the output electric power PFc of the fuel cell 11 (Step S18 in Fig. 4). In particular, the electric power converter control portion 45 sets the output target values of the converter 12 and of the inverter 14 based on the target value of the output electric power PFc of the fuel cell 11. The electric power converter control portion 45 generates drive signals (opening and closing signals of the switching element 12g) of the converter 12 in accordance with the output target value of the converter 12. The electric power converter control portion 45 generates drive signals (opening and closing signals from the first switching element 14e to the fourth switching element 14h) of the inverter 14 in accordance with the output target value of the inverter 14.

The control device 16 applies the generated drive signals to the gate 12g3 of the switching element 12g of the converter 12 via the drive circuit 16e shown in Fig. 1. The control device 16 applies the generated drive signals to the gates (the first, second, third and fourth gates 14e3, 14f3, 14g3, 14h3) of the plural (four) switching elements (the first, second, third and fourth switching elements 142, 14f, 14g,14h) via the drive circuit 16f shown in Fig. 1. Accordingly, the control device 16 may appropriately reduce the output electric power Pout of the inverter 14 in accordance with the estimated impedance value Z_est when the reverse power flow is estimated.

The control device 16 controls the output electric power PFc of the fuel cell 11 to a desired electric power value (the target value of the output electric power PFc) by controlling the supply amounts of the fuel and of the cathode gas supplied to the fuel cell 11. The relationship between the supply amounts of the fuel and of the cathode gas supplied to the fuel cell 11 and the output electric power PFc may be previously obtained by, for example, a simulation or an inspection of a real machine. The relationship is translated to, or described with a map or a formula and is memorized in the second memory device 16b2 shown in Fig. 2.

According to the system interconnection control device 10 of the first embodiment, the control device 16 includes the fuel cell output target value setting portion 44. When the output electric power detected value Pout_d of the inverter 14 is greater than the output electric power target value Pout_ref, the fuel cell output target value setting portion 44 sets the target value VFc_ref of the output voltage VFc of the fuel cell 11 by calculating the target value VFc_ref of the output voltage VFc of the fuel cell 11 by adding the correction value V2 to the target value V1_ref. The correction value V2 of the target value V1_ref co-relates to the estimated impedance value Z_est in which the internal impedance Z0 of the fuel cell 11 is estimated. Accordingly, when the load varies (when the electric power PL is decreased, or when the output electric power detected value Pout_d is greater than the output electric power target value Pout_ref), the system interconnection control device 10 of the first embodiment may set the target value VFc_ref of the output voltage VFc serving as a target value relating to the output electric power Pout of the fuel cell 11 in accordance with the fluctuation of the internal impedance Z0, and may inhibit the reverse power flow.

The internal impedance Z0 of the fuel cell 11 tends to increase due to an aged deterioration. Thus, for example, when the correction value V2 of the target value V1_ref is calculated on a basis of a map previously specifying the relationship between the temperature of a power generating portion of the fuel cell 11 and the correction value V2 of the target value V1_ref, the correction value V2 of the target value V1_ref may not be appropriate. Further, if plural maps specifying these relationships are provided in accordance with an operating time of the fuel cell 11, a control program may be complicated, or the size of the control program may be increased. According to the system interconnection control device 10 of the first embodiment, the correction value calculation portion 43 calculates the correction value V2 of the target value V1_ref by estimating the internal impedance Z0 of the fuel cell 11. Accordingly, the system interconnection control device 10 of the first embodiment may easily optimize the correction value V2 of the target value V1_ref comparing to the aforementioned case, thereby inhibiting the complexity and the size increase of the control program.

According to the system interconnection control device 10 of the first embodiment, the correction value calculation portion 43 calculates the estimated impedance value Z_est by dividing the output voltage variable quantity $\Delta V$ by the output current variable quantity $\Delta I$. The output voltage variable quantity $\Delta V$ serves as the variable quantity of the plural (twenty) voltage detected values VFc_d successively detected by the output voltage detector 15a. The output current variable quantity $\Delta I$ serves as the variable quantity of the plural (twenty) current detected values IFc_d successively detected by the output current detector 15b at the same time as the time when the plural (twenty) voltage detected values VFc_d are detected. Thus, according to the system interconnection control device 10 of the first embodiment, a current time series data and a voltage time series data do not have to be processed by using the FFT, respectively, as the disclosure in Patent reference 1 does. Thus, comparing to the disclosure disclosed in Patent reference 1, the system interconnection control device 10 of the first embodiment may simplify the processing required for the estimation of the internal impedance Z0 of the fuel cell 11, and may calculate the estimated impedance value Z_est in a short time. When the load varies (when the load electric power PL is decreased, or when the variable quantities of the output voltage variable quantity $\Delta V$ and of the output current variable quantity $\Delta I$ are great), the system interconnection control device 10 of the first embodiment calculates the estimated impedance value Z_est. Thus, a harmful effect, or an inconvenience (an inconvenience in which a processing result includes a variable value by dividing a numeral value close to zero by a numeral value close to zero) occurred by dividing the output voltage variable quantity $\Delta V$ by the output current variable quantity $\Delta I$ when the variable quantities of the output voltage variable quantity $\Delta V$ and of the output current variable quantity $\Delta I$ are less may be inhibited.

According to the system interconnection control device 10 of the first embodiment, the correction value calculation portion 43 calculates the output voltage variable quantity $\Delta V$ by subtracting the second voltage movement average value Vave2 from the first voltage movement average value Vave1. The first voltage movement average value Vave1 serves as the movement average of the plural (ten) voltage detected values VFc_d successively detected from the reference time t0 to the first time t11 in which the first time T1 has elapsed. The second voltage movement average value Vave2 serves as the movement average of the plural (ten) voltage detected values VFc_d successively detected from the first time t11 to the second time t12 in which the same time as the first time T1 has elapsed. The correction value calculation portion 43 calculates the output current variable quantity $\Delta I$ by subtracting the second current movement average value Iave2 from the first current movement average value IIave1. The first current movement average value Lave1 serves as the movement average of the plural (ten) current detected values IFc_d successively detected from the reference time t0 to the first time t11. The second current movement average value Iave2 serves as the movement average of the plural (ten) current detected values IFc_d successively detected from the first time t11 to the second time t12. Thus, for example, the system interconnection control device 10 may calculate the estimated impedance value Z_est by using the output voltage variable quantity $\Delta V$ and the output current variable quantity $\Delta I$ that each includes a wide range (the time twice of the first time T1) comparing to a case where the estimated impedance value Z_est is calculated by calculating the variable quantity by simply averaging the plural detected values successively detected during the first time T1, and by dividing the variable quantity by the variable quantity. Accordingly, the system interconnection control device 10 of the first embodiment may enhance the estimation accuracy of the internal impedance Z0.

As shown in Fig. 1, the voltage drop amount due to the internal impedance Z0 increases as the internal impedance Z0 increases. As a result, the difference between the internal voltage E0 generated by the power generation and the output voltage VFc of the fuel cell 11 increases. That is, because the effect of the voltage drop increases as the estimated impedance value Z_est increases, the correction amount of the target value V1_ref is required to be increased. According to the system interconnection control device 10 of the first embodiment, the correction value calculation portion 43 increases the correction value V2 of the target value V1_ref as the estimated impedance value Z_est increases. Accordingly, the system interconnection control device 10 of the first embodiment may correct the target value V1_ref by the appropriate correction value V2 that matches the estimated impedance value Z_est.

A second embodiment will hereunder be explained. The disclosure is not limited to the aforementioned first embodiment, and may be appropriately changed without departing from the scope of the invention. For example, when a temperature variable quantity of the power generating portion of the fuel cell 11 at a predetermined time is equal to or lower than a predetermined threshold value, the correction value calculation portion 43 may use the estimated impedance value Z_est that is most recently estimated.

As described above, the internal impedance Z0 varies in response to the temperature of the power generating portion (a cell stack reacting the fuel with the cathode gas) of the fuel cell 11. In other words, when the temperature change of the power generating portion of the fuel cell 11 is less, the variation of the internal impedance Z0 decreases. Thus, when the temperature change of the power generating portion of the fuel cell 11 is less, the estimation error of the estimated impedance value Z_est is less even if the estimated impedance value Z_est that is most recently estimated is used instead of estimating the internal impedance Z0.

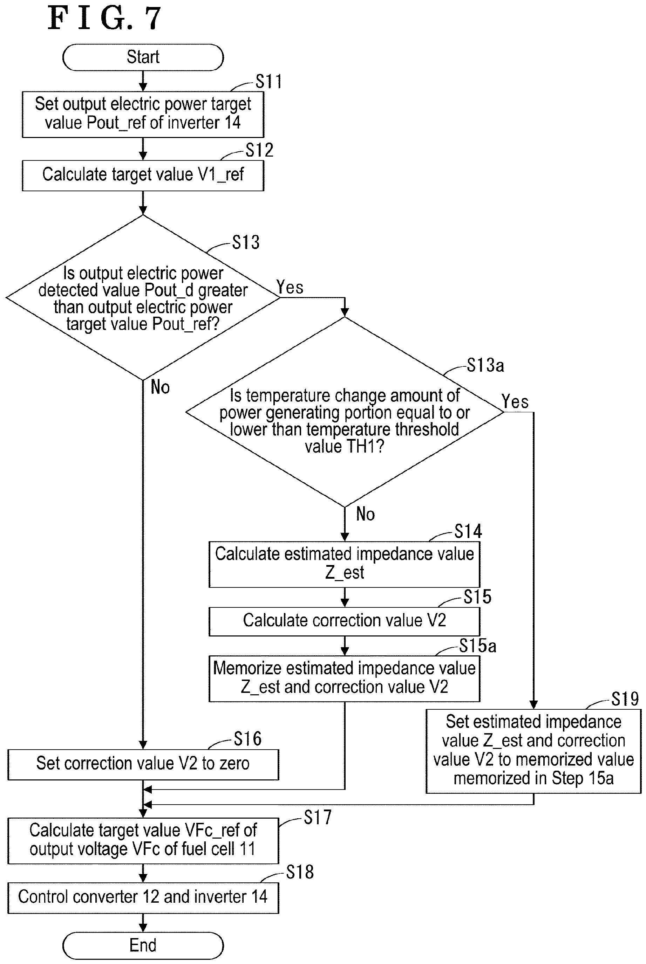

Fig. 7 shows a flowchart in which Step S13a, Step S15a and Step S19 are added to the flowchart shown in Fig. 4. Hereinafter, the difference between the first embodiment and the second embodiment will mainly be explained. When the output electric power detected value Pout_d of the inverter 14 is greater than the output electric power target value Pout_ref of the inverter 14 (YES in Step S13), the control device 16 determines whether the temperature variable quantity of the power generating portion of the fuel cell 11 at the predetermined time is equal to or less than a predetermined threshold value (a temperature threshold value TH1) in Step S13a.

The temperature of the power generating portion of the fuel cell 11 corresponds to, for example, the temperature level of the cell stack (the temperature of the cell, or an ambient temperature). The temperature of the cell stack tends to increase as the power generating amount increases. The estimation error of the estimated impedance value Z_est increases as the predetermined threshold value (the temperature threshold value TH1) of the temperature variable quantity increases. Accordingly, by the consideration of the allowable estimation error of the estimated impedance value Z_est, it is favorable that the predetermined time and the predetermined threshold value (the temperature threshold value TH1) for the calculation of the temperature variable quantity are preset by, for example, a simulation or an inspection by a real machine.

When the temperature variable quantity of the power generating portion is greater than the predetermined threshold value (the temperature threshold value TH1) (NO in Step S13a), similarly to the first embodiment, the correction value calculation portion 43 calculates the estimated impedance value Z_est (Step S14), and calculates the correction value V2 of the target value V1_ref (Step S15). According to the second embodiment, the control device 16 continues to memorize the estimated impedance value Z_est that is most recently calculated in Step S14 and the correction value V2 of the target value V1_ref that is most recently calculated in Step S15 even after calculating the target value VFc_ref of the output voltage VFc of the fuel cell 11 in Step S17 (Step S15a).

On the other hand, when the temperature variable quantity of the power generating portion is equal to or lower than the predetermined threshold value (the temperature threshold value TH1) (YES in Step S13a), the correction value calculation portion 43 sets the estimated impedance value Z_est to the estimated impedance value Z_est memorized in Step S15a. Then, the correction value calculation portion 43 sets the correction value V2 of the target value V1_ref to the correction value V2 memorized in Step S15a (Step S19). Then, the program proceeds to Step S17.

According to the system interconnection control device 10 of the second embodiment, the correction value calculation portion 43 sets the estimated impedance value Z_est that is estimated when the temperature variable quantity of the power generating portion of the fuel cell 11 at the predetermined time is greater than the predetermined threshold value, and that is most recently estimated to the estimated impedance value Z_est when the temperature variable quantity is equal to or less than the predetermined threshold value. Thus, the system interconnection control device 10 of the second embodiment may reduce the calculation frequency of the estimated impedance value Z_est, thereby inhibiting the estimation error of the estimated impedance value Z_est and reducing the load for processing.

The system interconnection control device 10 of the second embodiment may increase the correction value V2 of the target value V1_ref as the difference of the electric power between the output electric power detected value Pout_d of the inverter 14 and the output electric power target value Pout_ref of the inverter 14 (the deviation ∆Pout of the second embodiment) increases to decrease the output electric power PFc of the fuel cell 11 promptly. In this case, it is favorable that the correction value calculation portion 43 includes a relationship specification portion 43a specifying the relationship between, the difference of the electric power between the output electric power detected value Pout_d of the inverter 14 and the output electric power target value Pout_ref of the inverter 14, and the correction value V2 of the target value V1_ref. It is favorable that the relationship specification portion 43a includes a mutual relationship in which the correction value V2 of the target value V1_ref increases as the difference of the electric power (the deviation ∆Pout of the second embodiment) increases. It is favorable that the correction value calculation portion 43 calculates the correction value V2 of the target value V1_ref in accordance with the aforementioned mutual relationship.

The difference of the electric power is shown in a lateral axis, and the correction value V2 of the target value V1_ref is shown in a longitudinal axis. For example, the relationship specification portion 43a may specify the relationship between the difference of the electric power and the correction value V2 of the target value V1_ref by showing the relationship therebetween. The relationship may be previously obtained by, for example, a simulation or an inspection by a real machine. The relationship may be translated to, or described with a map or a formula, and may be memorized in the second memory device 16b2 shown in Fig. 2. As such, the relationship specification portion 43a may correspond to a map or a formula.

According to the system interconnection control device 10 of the second embodiment, the correction value calculation portion 43 includes the relationship specification portion 43a including the mutual relationship in which the correction value V2 of the target value V1_ref increase as the difference of the electric power between the output electric power detected value Pout_d of the inverter 14 and the output electric power target value Pout_ref of the inverter 14 increases. The correction value calculation portion 43 calculates the correction value V2 of the target value V1_ref in accordance with the mutual relationship. Accordingly, the correction value calculation portion 43 may calculate the correction value V2 of the target value V1_ref in consideration of the difference of the electric power between the output electric power detected value Pout_d of the inverter 14 and the output electric power target value Pout_ref of the inverter 14. Thus, the system interconnection control device 10 of the second embodiment may decrease the output electric power PFc of the fuel cell 11 promptly by increasing the correction value V2 of the target value V1_ref as the difference of the electric power increases.

The fuel cell output target value setting portion 44 may set a target value IFc_ref of the output current IFc of the fuel cell 11 as a target value relating to the output electric power PFc of the fuel cell 11. In this case, a target value of the target value IFc_ref of the output current IFc of the fuel cell 11 corresponds to a target value I1_ref, and a correction value of a target value I1_ref corresponds to a correction value I2. The fuel cell output target value setting portion 44 sets the target value IFc_ref of the output current IFc of the fuel cell 11 by calculating the target value IFc_ref of the output current IFc of the fuel cell 11 by subtracting the correction value I2 of the target value I1_ref calculated by the correction value calculation portion 43 from the target value I1_ref calculated by the target value calculation portion 41. Because the respective dimensions of the output voltage VFc and the output current IFc are different from each other, it is favorable that the correction value I2 of the target value I1_ref is smaller than the correction value V2 of the output voltage VFc. Similarly to the correction value V2 of the output voltage VFc, the correction value I2 of the target value I1_ref may be previously obtained by, for example, a simulation or an inspection by a real machine.

According to the system interconnection control device 10 of the first and second embodiments, various operations in addition to the operations shown in Figs. 4 and 7 may be provided. Furthermore, the sequences of the operations shown in Figs. 4 and 7 may be appropriately changed. The system interconnection control device 10 of the first and second embodiments may be applied to a multi-phase (for example, three-phase) system power supply and a multi-phase (for example, three-phase) inverter.

A system interconnection control device (10) includes the control device (16) including a target value calculation portion (41) calculating a fuel cell output target value (PFC_ref) by controlling an output electric power detected value (Pout_d) to be matched with an output electric power target value (Pout_ref) of an inverter (14) being set by following the load electric power calculation value (PL_d), a correction value calculation portion (43) estimating an internal impedance (Z0) of the fuel cell (11) and calculating a correction value (V2) of the target value (V1_ref) that correlates to the estimated impedance value (Z_est), and a fuel cell output target value setting portion (44) setting the fuel cell output target value (PFC_ref) by calculating the fuel cell output target value (PFC_ref) by adding or subtracting the correction value (V2) to or from the target value (V1_ref).

**Claims**

1. A system interconnection control device (10), comprising:

a fuel cell (11) generating an electric power with a fuel and a cathode gas;
a converter (12) boosting a direct current power outputted from the fuel cell (11);
an inverter (14) converting the direct current power boosted by the converter (12) into an alternating current power, the inverter (14) outputting the alternating current power to a load (30) being connected to a system power supply (20);
an output electric power detector (15d) detecting an output electric power of the inverter (14);
a utility electric power detector (15e) detecting a utility electric power supplied to the load (30) from the system power supply (20); and
a control device (16) controlling the converter (12) and the inverter (14) by setting a fuel cell output target value (PFC_ref) serving as a target value relating to an output electric power of the fuel cell (11), such that the output electric power of the inverter (14) follows a load electric power (PL) of the load (30), in response to a load electric power calculation value (PL_d) being calculated by using an output electric power detected value (Pout_d) detected by the output electric power detector (15d) and a utility electric power detected value (Pgrid_d) detected by the utility electric power detector (15e); wherein
the control device (16) includes:

a target value calculation portion (41) calculating a target value (V1_ref) serving as the fuel cell output target value (PFC_ref) by controlling the output electric power detected value (Pout_d) to be matched with an output electric power target value (Pout_ref) of the inverter (14) being set by following the load electric power calculation value (PL_d);
a correction value calculation portion (43) estimating an internal impedance (Z0) of the fuel cell (11) and calculating a correction value (V2) of the target value (V1_ref) that correlates to the estimated impedance value (Z_est) when the output electric power detected value (Pout_d) is greater than the output electric power target value (Pout_d); and
a fuel cell output target value setting portion (44) setting the fuel cell output target value (PFC_ref) by calculating the fuel cell output target value (PFC_ref) by adding or subtracting the correction value (V2) to or from the target value (V1_ref) when the output electric power detected value (Pout_d) is greater than the output electric power target value (PFC_ref).

2. The system interconnection control device (10) according to claim 1, further comprising:

an output voltage detector (15a) detecting an output voltage of the fuel cell (11); and
an output current detector (15b) detecting an output current of the fuel cell (11); wherein
the correction value calculation portion (43) calculates the estimated impedance value (Z_est) by dividing an output voltage variable quantity ($\Delta V$) serving as a variable quantity of a plurality of voltage detected values (VFc_d) successively detected by the output voltage detector (15b) by an output current variable quantity ($\Delta I$) serving as a variable quantity of a plurality of current detected values (IFc_d) successively detected by the output current detector (15a) during a time period that is a same as a time period when the plurality of the voltage detected values (VFc_d) is detected.

3. The system interconnection control device (10) according to claim 2, wherein

the correction value calculation portion (43) calculates the output voltage variable quantity ($\Delta V$) by using a first voltage movement average value (Vave1) serving as a movement average of the plurality of voltage detected values (VFc_d) successively detected from a reference time (t0) to a first time (t11) in which a first time period (T1) has elapsed, and a second voltage movement average value (Vave2) serving as a movement average of the plurality of voltage detected values (VFc_d) successively detected from the first time (t11) to a second time (t12) in which a same time period as the first time period (T1) has elapsed, the correction value calculation portion (43) calculating the output voltage variable quantity ($\Delta V$) by subtracting the second voltage movement average value (Vave2) from the first voltage movement average value (Vave1); and
the correction value calculation portion (43) calculates the output current variable quantity ($\Delta I$) by using a first current movement average value (Iave1) serving as a movement average of the plurality of current detected values (IFc_d) successively detected from the reference time (t0) to the first time (t11), and a second current movement average value (Iave2) serving as a movement average of the plurality of current detected values (IFc_d) successively detected from the first time (t11) to the second time (t12), the correction value calculation portion (43) calculating the output current variable quantity ($\Delta$I) by subtracting the second current movement average value (Iave2) from the first current movement average value (Iave1).

4. The system interconnection control device (10) according to claim 1, wherein

the correction value calculation portion (43) sets the estimated impedance value (Z _est) that is estimated when a temperature variable quantity of a power generating portion of the fuel cell (11) at a predetermined time is greater than a predetermined threshold value (TH1), the estimated impedance value (Z_est) that is most recently estimated, as the estimated impedance value (Z_est) when the temperature variable quantity is equal to or lower than the predetermined threshold value (TH1).

5. The system interconnection control device (10) according to one of claims 1 to 4, wherein

the correction value calculation portion (43) increases the correction value (V2) of the target value (V1_ref) as the estimated impedance value (Z_est) increases.

6. The system interconnection control device (10) according to one of claims 1 to 4, wherein

the correction value calculation portion (43) includes a relationship specification portion (43a) specifying a relationship between, a difference between the electric power of the output electric power detected value (Pout_d) and the electric power of the output electric power target value (Pout_ref), and the correction value (V2) of the target value (V1_ref);
the relationship specified by the relationship specification portion (43a) includes a mutual relationship in which the correction value (V2) of the target value (V1_ref) increases as the difference between the electric power of the output electric power detected value (Pout_d) and the electric power of the output electric power target value (Pout_ref) increases;
the correction value calculation portion (43) calculates the correction value (V2) of the target value (V1_ref) in accordance with the mutual relationship.

# F I G. 1

# F I G. 2

16

Control device

16a

CPU

16d

16b1

RAM

16b2

ROM

16c

Input/output interface

16b

# FIG. 3

19

# FIG. 4

```
        ( Start )
            │
            ▼                    ⌐S11
┌──────────────────────────────┐
│ Set output electric power     │
│ target value Pout_ref of      │
│ inverter 14                   │
└──────────────────────────────┘
            │
            ▼                    ⌐S12
┌──────────────────────────────┐
│ Calculate target value V1_ref │
└──────────────────────────────┘
            │
            ▼                    ⌐S13
```

Is output electric power detected value Pout_d greater than output electric power target value Pout_ref? — Yes → 

No ↓

⌐S14 Calculate estimated impedance value Z_est

⌐S15 Calculate correction value V2

⌐S16 Set correction value V2 to zero

⌐S17 Calculate target value VFc_ref of output voltage VFc of fuel cell 11

⌐S18 Control converter 12 and inverter 14

( End )

# FIG. 5

Reference time t0 — First time period T1 — First time t11 — First time period T1 — Second time t12

| No. | 20 | 19 | ・・・ | 12 | 11 | 10 | 9 | ・・・ | 2 | 1 |
|---------|------|------|------|------|------|------|-----|------|------|------|
| voltage | M20 | M19 | ・・・ | M12 | M11 | M10 | M9 | ・・・ | M2 | M1 |
| current | N20 | N19 | ・・・ | N12 | N11 | N10 | N9 | ・・・ | N2 | N1 |

Target of first voltage movement average value Vave1 and Target of first current movement average value Iave1

Target of second voltage movement average value Vave2 and Target of second current movement average value Iave2

# F I G. 6

Correction value V2

V23 ┄┄┄┄┄┄┄┄┄┄┄┄┄┄┄┄

L1

V22 ┄┄┄┄┄┄┄┄┄

V21 ┄┄┄┄
V20

0  Z11   Z12   Z13   Estimated impedance
                      value Z_est

# FIG. 7

```
         ( Start )
              │
              ▼                    S11
┌─────────────────────────────┐
│ Set output electric power target │
│  value Pout_ref of inverter 14  │
└─────────────────────────────┘
              │
              ▼                    S12
┌─────────────────────────────┐
│   Calculate target value V1_ref  │
└─────────────────────────────┘
              │
              ▼                    S13
        ╱──────────────╲
       ╱  Is output electric power ╲      Yes
      ╱ detected value Pout_d greater ╲─────────┐
      ╲  than output electric power   ╱         │
       ╲   target value Pout_ref?    ╱          │
        ╲──────────────╱            ▼           S13a
              │ No              ╱──────────────╲
              │                ╱ Is temperature change amount of ╲   Yes
              │               ╱  power generating portion equal to or ╲──────┐
              │               ╲ lower than temperature threshold  ╱         │
              │                ╲      value TH1?      ╱                      │
              │                 ╲──────────────╱                            │
              │                       │ No                                  │
              │                       ▼              S14                    │
              │          ┌─────────────────────────────┐                    │
              │          │ Calculate estimated impedance value │            │
              │          │            Z_est             │                   │
              │          └─────────────────────────────┘                    │
              │                       │                S15                   │
              │                       ▼                                      │
              │          ┌─────────────────────────────┐                    │
              │          │   Calculate correction value V2  │               │
              │          └─────────────────────────────┘                    │
              │                       │                S15a                  │
              │                       ▼                                      │
              │          ┌─────────────────────────────┐                    │
              │          │ Memorize estimated impedance value │             │
              │          │  Z_est and correction value V2  │                S19
              │          └─────────────────────────────┘        ┌─────────────────────────┐
              │              S16      │                          │  Set estimated impedance   │
  ┌─────────────────────────┐        │                          │ value Z_est and correction │
  │ Set correction value V2 to zero │ │                          │ value V2 to memorized value │
  └─────────────────────────┘        │                          │  memorized in Step 15a    │
              │                       │                          └─────────────────────────┘
              ▼───────────◄──────────┘                                      │
              ◄──────────────────────────────────────────────────────────────┘
              │                       S17
  ┌─────────────────────────┐
  │ Calculate target value VFc_ref of │
  │ output voltage VFc of fuel cell 11 │
  └─────────────────────────┘
              │                       S18
  ┌─────────────────────────┐
  │ Control converter 12 and inverter 14 │
  └─────────────────────────┘
              │
              ▼
          ( End )
```

22

Europäisches
Patentamt

European
Patent Office

Office européen
des brevets

# EUROPEAN SEARCH REPORT

Application Number

EP 17 15 1752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 933 442 A2 (OMRON CORP A CORP OF JAPAN [JP]) 18 June 2008 (2008-06-18) * paragraphs [0020] - [0029], [0039]; figures 1,2,5 * | 1-6 | INV. H02J3/38 H01M8/04537 |
| Y | US 2008/044693 A1 (BENZIGER JAY B [US] ET AL) 21 February 2008 (2008-02-21) * paragraphs [0005] - [0007], [0011], [0046] * | 1-6 | |
| Y | US 2012/122001 A1 (LEE NAM WOO [KR]) 17 May 2012 (2012-05-17) * paragraphs [0003], [0011], [0018], [0048] - [0051]; figures 1,2,4 * | 3 | |

TECHNICAL FIELDS
SEARCHED      (IPC)

H02J
H01M

The present search report has been drawn up for all claims

| Place of search | Date of completion of the search | Examiner |
|---|---|---|
| Munich | 20 June 2017 | Bergler, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 1752

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2017

| Patent document cited in search report | | Publication date | Patent family member(s) | | Publication date |
|---|---|---|---|---|---|
| EP 1933442 | A2 | 18-06-2008 | CN | 101207211 A | 25-06-2008 |
| | | | EP | 1933442 A2 | 18-06-2008 |
| | | | JP | 5109360 B2 | 26-12-2012 |
| | | | JP | 2008152959 A | 03-07-2008 |
| | | | KR | 20080055634 A | 19-06-2008 |
| | | | US | 2008152974 A1 | 26-06-2008 |
| US 2008044693 | A1 | 21-02-2008 | NONE | | |
| US 2012122001 | A1 | 17-05-2012 | KR | 20120051791 A | 23-05-2012 |
| | | | US | 2012122001 A1 | 17-05-2012 |

EPO FORM P0459

For more details about this annex : see Official Journal of the European Patent Office, No. 12/82

**REFERENCES CITED IN THE DESCRIPTION**

**Patent documents cited in the description**

- JP 2013145692 A